Europäisches Patentamt

(19) European Patent Office

Office européen des brevets

(11) Publication number : **0 331 222 B1**

(12) **EUROPEAN PATENT SPECIFICATION**

(45) Date of publication of patent specification :
30.12.92 Bulletin 92/53

(51) Int. Cl.⁵ : **A23P 1/02,** A23F 3/30,
A23F 5/36, A23G 1/04

(21) Application number : 89200314.6

(22) Date of filing : 10.02.89

(54) **Granular beverage material for tea, coffee or cocoa, and method of its preparation.**

(30) Priority : 02.03.88 GB 8804958

(43) Date of publication of application :
06.09.89 Bulletin 89/36

(45) Publication of the grant of the patent :
30.12.92 Bulletin 92/53

(84) Designated Contracting States :
AT BE CH DE ES FR GB GR IT LI NL SE

(56) References cited :
EP-A- 0 204 256
DE-A- 2 035 071
DE-A- 2 402 446
US-A- 4 308 288
PATENT ABSTRACTS OF JAPAN, vol. 11, no.
184 (C-427)[2631], 12th June 1987

(73) Proprietor : UNILEVER N.V.
Weena 455
NL-3013 AL Rotterdam (NL)
(84) BE CH DE ES FR GR IT LI NL SE AT
Proprietor : UNILEVER PLC
Unilever House Blackfriars P.O. Box 68
London EC4P 4BQ (GB)
(84) GB

(72) Inventor : Chandler, Simon A.
25 Shannon Way Southend Road
Beckenham Kent BR3 1WG (GB)
Inventor : Van Rooijen, Adrianus
Garnaal 22
NL-3225 AG Hellevoetsluis (NL)

(74) Representative : Hartong, Richard Leroy et al
Unilever N.V. Patent Division P.O. Box 137
NL-3130 AC Vlaardingen (NL)

## Description

The present invention relates to a granular beverage material for tea or coffee, and a method of its preparation. Granular beverage materials are materials which can be used in the preparation of a hot or cold beverage by combining the granular material with water.

A well-known method for the preparation of granular beverage materials involves the freeze drying of a liquid material. This method is energy and time consuming, requires the use of liquid starting materials and involves expensive equipment. Furthermore the freeze drying of compositions which contain volatile flavouring components generally results in flavour loss.

Another well-known method for the preparation of granular beverage materials involves the melting of a matrix material e.g. sugar, mixing this matrix material with flavour components of the beverage and cooling the mixture for instance by extruding into an ambient temperature room. The high temperatures during the formation of these products often have a negative impact on the flavour quality.

A further well-known method involves the combination of powdered materials on a fluid bed system by the addition of moisture. This process has a high energy consumption when a drying stage is required and often gives rise to loss of flavour.

Another disadvantage of the above mentioned methods is that, especially when used in producing products which contain carbohydrates in combination with hygroscopic components, they often result in hygroscopic products which require a flow agent to avoid cacking. Moreover the above mentioned methods are less suitable for the production of tea or coffee based materials, these alkaloid containing materials have been found to comprise particular vulnerable flavour compounds, which often deteriorate upon using the above mentioned methods for the preparation of granular materials.

In German Patent Applications DE-A-2,402,446 (Hydrostatic Trading Trust) a process has been described for sintering ground coffee material by the simultaneous application of relatively low pressure (5-10 kgf/m$^2$), but relatively high temperature (80-120°C) between two plates. Even though the sintering treatment is relatively short (10-30 seconds), the applied high temperature has a detrimental influence on taste and/or flavour of the sintered material, because volatile flavour and/or taste components evaporate. Also Maillard reactions lead to undesirable taste components.

In Japanese Patent Application JP-A-62006,633 (Nara-Ken) green tea leaves are simultaneously dried and compacted between two consecutive sets of pressure rollers having a surface temperature of 150-280°C. Such temperatures are absolutely detrimental for the quality of instant tea or coffee products which have to be agglomerated.

It is an object of the present invention to provide a method for producing granular beverage materials suitable for preparing tea or coffee, which granules are less susceptible to moisture uptake and which method allows the use of a substantially dry mix of ingredients as a starting material, without the need of moisture addition or the use of a binder, and which method can be carried out in short time without the need of an energy consuming costly drying and/or cooling stage. It has been found that even vulnerable compounds as tea or coffee can satisfactory be transformed into granular beverage materials by using a dry compacting process.

Therefore the invention relates to a method for preparing a granular beverage materials comprising the steps of

a) preparing a dry mix comprising tea or coffee material and having a moisture content of 0-10 % wt.

b) pressing said mix into sheets at a temperature of 10°C to 40°C under a pressure of up to 2 tons/cm, and

c) reducing said sheets in size to form granules.

The dry starting mix can be any mix suitable for tea or coffee drink preparation. The expression dry mix refers to a starting mix which results in products which do not need an additional drying step. If necessary this mix may contain small amounts of liquid ingredients such as flavour oils, high DE maltodextrins or flavouring extracts. Preferably the dry mix is carbohydrate based, this means that the mix comprises up to 99.9 % wt of a carbohydrate material. Usually the amount of carbohydrate will be more than 10% wt.

Examples of suitable dry mixes include for instance tea like mixes comprising tea like vegetable solids and/or tea extracts eventually in combination with sugar and/or other carbohydrate material and/or whitening substances; coffee like mixes comprising coffee or coffee substitute solids, eventually in combination with sugar and/or other carbohydrate material and/or whitening substances.

In this specification the expression tea or, coffee material refers to compositions comprising tea- or coffee-solids or substitutes thereof. Tea can for instance be based on any vegetable material which is commonly used for leaf-extraction. Examples of these are green tea, black tea, decaffeinated tea, peppermint, matte etc. Coffee can for instance be based on any vegetable material commonly used for being extracted in the ground state. Examples of these materials are coffee, malt, soy beans and chicory.

Suitable carbohydrate materials are for instance starches, maltodextrins or sugar. Preferred carbohydrate materials are sweet materials such as for instance natural sugars. Mixtures of different carbohydrate materials are possible. The amount of carbohydrate material can be varied in a broad range depending on the type of product to be produced.

A preferred embodiment of a beverage material according to the invention is a material suitable for the preparation of ice-tea.

Normally for ice-tea products the carbohydrate level will be rather high, due to its high sugar content. Preferred range is 80-99.9% sugar.

Usually the preferred range of carbohydrates will be from 40-90%.

Dry mix compositions may optionally comprise other ingredients such as e.g. artificial or other sweeteners fillers such as cellulose or fibres, colorants, anti-oxidants etc.

The salt content should be less than 5% most preferred less than 2% to avoid unexceptable saltiness.

The invention is particularly suitable for an ice-tea mix. Ice tea products generally comprise a cold water soluble tea component and sugar and optional other ingredients and flavours. Due to the ingredients of these products they are usually highly hygroscopic and suffer caking problems. Furthermore well-known ice-tea products have a low density which requires the use of several tea-spoons of the beverage material to make one cup of ice-tea. Furthermore the products are usually rather dusty. Surprisingly it has been found that the method according to the invention provides an ice-tea product which in comparison to standard products is less susceptible of moisture uptake, ensures higher flavour retention, low dust level and importantly a density which allows the use of about one tea spoon of beverage material to produce a cup of ice-tea.

A preferred method for pressing the dry mix into sheets involves the use of a roller press such as for instance described in DE 32 20 916. Such a press comprises a pre-compacting zone followed by two rollers which effect the sheet formation. The force exerted onto the mixture during sheet formation is up to 2 t/cm. The thickness of the sheet formed is preferably between 0.1 and 10 mm, more preferred between 0.5 and 6 mm.

The pressing is preferably carried out at a temperature substantially below the melting temperature of the carbohydrate material. It is to operate at temperatures of from 10-40°C depending on air temperature and humidity, preferably at temperatures which only exceed ambient temperatures by a few degrees caused by a slight temperature rise during pre-compaction and pressing.

After sheet formation the formed sheets are reduced in size to obtain the desired particle size, any conventional method for breaking and or grinding can be used. The preferred average particle dimension size of the final product is preferably between 0.5 and 10 mm, most preferred between 0.5-2 mm. The bulk density of the final product is preferably more than 100 g/litre, most preferred 700-1000 g/litre.

The invention will be further illustrated by means of the following examples.

Example I

A coffee complete mix was made comprising
instant coffee powder     15% wt
milk powder     27% wt
sugar     58% wt
the mixture was compacted in a roller presser ex Alexanderwerke® using a pressure of 0.8 tons/cm into sheets having a thickness of 4 mm. The sheets were ground, the final granular product has a particle size of 0.5 to 1.25 mm. The product was prepared for consumption by mixing 10-12 grams with a cup of hot water and stirring.

Example II

A tea complete mix was made comprising
instant tea powder     1.5% wt
milk powder     31% wt
sugar     67.5% wt
the mixture was compacted in a roller presser ex Alexanderwerke using a pressure of 0.4 tons/cm into sheets having a thickness of 3 mm, the sheets were ground until particles having a size of from 0.5 to 1.25 mm were obtained. The product was prepared for consumption by pouring a cupful of hot water onto 8-10 grams of the granular product.

Example III

an ice-tea mix was made comprising
instant tea     1.7% wt

| citric acid | 2.4% wt |
| sodium citrate | 0.3% wt |
| lemon flavour | 0.8% wt |
| sugar | 94.8% wt |

the mixture was compacted in a roller presser ex Alexanderwerke using a pressure of 0.4 tons/cm into sheets having a thickness of 1.5 mm. The sheets were ground until particles having a size of from 0.5 to 1.2 mm were obtained. The product was prepared for consumption by pouring a cup of cold water onto 6-8 grams of the granular product and stirring.

## Claims

1. A method for preparing a granular beverage material comprising the step of:
   a) preparing a dry mix comprising tea or coffee material and having a moisture content of 0-10% by weight,
   b) pressing said mix into sheets at a temperature of 10°C to 40°C under a pressure of up to 2 tons/cm, and
   c) reducing said sheets in size to form granules.

2. A method according to claim 1, characterised in that the dry mix is a carbohydrate based dry mix.

3. A method according to claim 2, characterised in that the carbohydrate material comprises a sugar.

4. A method according to claim 1, characterised in that the dry mix is an ice-tea mix.

5. A method according to claim 1, characterised in that the pressing is carried out in a roller press.

6. A granular beverage material comprising compacted non-heat-treated granules comprising tea or coffee material and having a moisture content of 0-10% by weight, the bulk density of the product being more than 100 g/litre.

7. A granular beverage material according to claim 6 being an ice-tea mix.

## Patentansprüche

1. Verfahren zum Herstellen eines granulären Getränkematerials, umfassend die folgenden Schritte:
   a) Herstellen einer Trockenmischung umfassend Tee- oder Kaffeematerial und mit einem Feuchtigkeitsgehalt von 0 bis 10 Gew.%,
   b) Pressen der Mischung zu Bögen bei einer Temperatur von 10 bis 40°C unter einem Druck von bis zu 2 Tonnen/cm und
   c) Vermindern der Größe der Bögen zur Bildung von Granülen.

2. Verfahren nach Anspruch 1, dadurch gekennzeichnet, daß die Trockenmischung eine Trockenmischung auf Kohlehydratbasis ist.

3. Verfahren nach Anspruch 2, dadurch gekennzeichnet, daß das Kohlehydratmaterial einen Zucker umfaßt.

4. Verfahren nach Anspruch 1, dadurch gekennzeichnet, daß die Trockenmischung eine Eisteemischung ist.

5. Verfahren nach Anspruch 1, dadurch gekennzeichnet, daß das Pressen in einer Walzenpresse durchgeführt wird.

6. Granuläres Getränkematerial bestehend aus kompaktierten nicht-wärmebehandelten Granülen umfassend Tee- oder Kaffeematerial und mit einem Feuchtigkeitsgehalt von 0 bis 10 Gew.%, wobei die Schüttdichte des Produktes mehr als 100 g/Liter beträgt.

7. Granuläres Getränkematerial nach Anspruch 6, das eine Eisteemischung ist.

**Revendications**

1. Procédé de préparation de matériaux en granulés pour boisson qui comprend les étapes de
   a) préparation d'un mélange sec comprenant du matériau de thé ou de café et qui a une teneur en humidité de 0-10 % en poids,
   b) la compression dudit mélange en feuilles à une température comprise entre 10°C et 40°C sous une pression pouvant atteindre 2 tonnes/cm, et
   c) la réduction de taille desdits feuilles pour former des granulés.

2. Procédé selon la revendication 1, caractérisé en ce que le mélange à sec est un mélange à sec à base d'hydrate de carbone.

3. Procédé selon la revendication 2, caractérisé en ce que le matériau d'hydrate de carbone comprend un sucre.

4. Procédé selon la revendication 1, caractérisé en ce que le mélange sec est un mélange pour thé-glacé.

5. Procédé selon la revendication 1, caractérisé en ce qu'on réalise la compression dans une presse à cylindre.

6. Matériau en granulés pour boisson qui comprend des granulés compactés sans traitement thermique qui comprennent du matériau de thé ou de café et qui ont une teneur en humidité de 0-10 % en poids, la densité apparente du produit étant supérieure à 100 g/litre.

7. Matériau en granulés pour boisson selon la revendication 6 qui est un mélange pour thé-glacé.